# DEMANDE DE BREVET EUROPEEN

(11) **EP 1 683 568 A1**
(43) Date de publication de la demande: **26.07.2006**
(21) Numéro de dépôt: 05356219.5
(22) Date de dépôt: 22.12.2005
(51) Int. Cl.: B01J 13/10

(54) **Procédé de coacervation amélioré pour la préparation de microcapsules de principe actif hydrophobe isolées filtrables et redispersables dans l'eau**

(30) Priorité: 29.12.2004 FR 0413994
(71) Demandeur: Euracli, 38670 Chasse sur Rhône (FR)
(72) Inventeur: Rastello de Boisseson, Marie, 42800 Saint Martin La Plaine (FR)

(57) **Abrégé**

L'invention concerne un procédé de fabrication de microcapsules de principes actifs hydrophobes de tailles inférieures à 50 µm, de préférence entre 1 et 20 µm, isolées, filtrables et redispersables dans l'eau, caractérisé en ce que le procédé de coacervation est amélioré par l'introduction d'un agent anti-agglomération avant la formation de la paroi capsulaire.

## Description

La coacervation complexe est utilisée depuis plusieurs dizaines d'années pour préparer des microcapsules de principes actifs hydrophobes. Ces microcapsules sont généralement destinées à des applications cosmétiques et sont de ce fait de diamètre assez élevé entre 100µm et 1 mm environ. Pour ces tailles de microcapsules, la réalisation de capsules isolées ne pose pas de difficulté et la filtration a lieu sans problème également.

En revanche, de nombreuses applications, dont la préparation d'étiquettes ou d'encre d'imprimerie, impliquent d'obtenir les capsules de tailles les plus petites possibles, à savoir inférieures à 20µm afin qu'elles résistent aux méthodes d'impression, et de pouvoir les filtrer puis les redisperser dans un milieu aqueux. Et l'une des difficultés des procédés de l'art antérieur est d'isoler les capsules pour optimiser le dépôt ou le mélange ultérieur dans l'encre.

Pour satisfaire ces exigences, on a développé des procédés de coacervation complexe, par exemple, le brevet US 2800457 comprend les quatre étapes suivantes :
1) Emulsification de l'huile dans une solution aqueuse contenant un premier colloïde hydrophile ionisable dans l'eau
2) Mélange de cette émulsion avec une deuxième solution aqueuse contenant le deuxième colloïde hydrophile ionisable, de charge opposée au premier colloïde. Ajout d'eau et/ou réglage du pH pour provoquer la coacervation
3) Refroidissement du coacervat afin de provoquer la gélification
4) Ajout d'un agent durcisseur et réglage du pH à l'alcalinité

Ce procédé permet d'obtenir des capsules de taille comprise entre 100 µm et quelques millimètres. Mais dès que l'on souhaite obtenir des capsules de taille inférieure à 50 µm, les capsules s'agglomèrent au cours du procédé.

Les brevets FR 2100209 et GB 1393805 mettent en effet en évidence que le réglage du pH à l'alcalinité sans diluer la solution entraîne une augmentation de viscosité qui provoque une prise en masse des capsules et la formation de capsules de diamètre de 200µm à 5mm. Afin d'améliorer le procédé, les brevets FR 2100209 et GB 1393805 proposent d'ajouter un agent de protection contre l'agglutination qui empêche l'élévation de la viscosité et par suite, l'absence d'agrégation des microcapsules.

Selon le procédé des brevets FR 2100209 et GB 1393805, des microcapsules de diamètre compris entre 10 et 20 µm peuvent être préparées grâce à l'ajout de l'agent de protection contre l'agglutination. En effet, si dans les mêmes conditions, on remplace la quantité d'agent de protection contre l'agglutination par de l'eau, la viscosité du milieu augmente beaucoup et les capsules obtenues sont supérieures à 50µm. L'agent de protection contre l'agglutination peut être un dérivé de cellulose tels que la carboxyméthylcellulose, un dérivé de l'amidon, la pectine ou encore un condensat d'acide naphtalènesulfonique-formaline.

Mais lorsque les microcapsules sont préparées en présence d'un agent de protection contre l'agglutination tel que la carboxyméthylcellulose, la filtration des capsules devient impossible. En effet l'agent de protection contre l'agglutination bouche le filtre car la solution de microcapsules devient plus visqueuse en présence du polymère.

Le brevet FR 2091482 a pour objet de rendre des microcapsules hydrophobes.

Le procédé décrit dans ce brevet consiste à réaliser une première encapsulation par coacervation par exemple, suivie d'une deuxième encapsulation en présence d'un silane.

Outre sa complexité, ce procédé conduit à la formation d'agrégats hydrophobes.

En effet, si ce brevet décrit un procédé de fabrication de microcapsules par coacervation dont les gouttelettes d'actifs à encapsuler ont un diamètre de 2 à 5 µm, l'exemple 1 du brevet décrit le traitement hydrophobe réalisé sur ces capsules, qui aboutit à l'obtention d'objets de 5 à 15 µm, ce qui est 2 à 3 fois le diamètre initial. Il semblerait donc qu'il s'agisse d'agglomérats de 2 à 3 capsules plutôt que des capsules isolées. Lesdites capsules ainsi préparées sont lavées, filtrées et séchées sur un tissu éponge absorbant. En outre, elles se présentent à la fin sous la forme d'une poudre sèche qui ne mouille qu'avec difficulté lorsqu'on la disperse dans l'eau.

### OBJET DE L'INVENTION

L'invention a pour objet un procédé de fabrication de microcapsules de principes actifs hydrophobes de tailles inférieures à 50 µm, de préférence entre 1 et 20 µm, isolées, filtrables et redispersables dans l'eau. Le procédé amélioré de préparation de ces microcapsules est basé sur l'introduction d'un agent anti agglomération au moment de l'étape de formation du coacervat, juste avant la formation de la paroi capsulaire. Le procédé amélioré comprend les étapes suivantes :
1) Préparation d'une solution aqueuse à 35°C contenant les deux colloïdes hydrophiles ionisables et de charges opposées tels que la gélatine et la gomme arabique
2) Emulsification du principe actif hydrophobe dans cette phase qui contient les deux colloïdes jusqu'à l'obtention de taille comprise entre 1 et 20 µm selon la taille souhaitée.
3) Dilution dans une phase aqueuse à 35°C, sous agitation forte
4) Ajout de l'agent anti-agglomération
5) Réglage du pH à 4,5 pour initier la coacervation
6) Refroidissement puis ajout d'un agent de réticulation
7) Réglage du pH

Les colloïdes de coacervation utilisables dans le cadre de l'invention sont choisis parmi les gélatines et des colloïdes de charge opposée choisis parmi les polymères tels que la gomme arabique, les alginates, les carragheenanes, les xanthanes, la carboxyméthylcellulose et les copolymères méthyl vinyl éther/anhydride maléique.

L'agent anti-agglomération est un silane, de préférence le (3-glycidyloxypropyl)trimethoxysilane commercialisé par FLUKA ou tout silane capable de réagir avec la gélatine et/ou la gomme arabique. Cet agent anti-agglomération est utilisé à des doses comprises entre 0,1 et 10 %, et de préférence entre 0,5 et 5 % en poids.

La suspension de microcapsules ainsi préparée est ensuite filtrée sur Buchner à l'aide d'une trompe à eau. Le procédé objet de l'invention permet d'éviter l'agglomération des capsules et contre toute attente, autorise la dispersion desdites capsules dans l'eau ou tout mélange aqueux.

Les principes actifs que l'on peut utiliser dans le cadre de l'invention sont très divers, sous réserve qu'ils aient un caractère hydrophobe. On peut citer les cristaux liquides, une dispersion d'oxyde de titane vendue sous le nom Blanc Covalim, des parfums hydrophobes et des actifs cosmétiques en phase huileuse.

En outre, ce procédé s'applique parfaitement à l'encapsulation d'émulsion primaire de type E1/H par l'intermédiaire de la formation d'une émulsion double (E1/H/E2). L'émulsion primaire est composée dans ce cas d'une phase aqueuse E1 émulsionnée dans une phase huileuse H. La deuxième phase aqueuse E2 est la solution de colloïdes.

### Exemples

Exemple n°1 : montrant l'agglomération, des capsules de taille inférieure à 50µm par le procédé de coacervation complexe décrit dans l'exemple 1 du brevet FR 2100209 sans ajout d'agent anti-agglutination

### Préparation de la solution de gomme arabique et de gélatine

On pèse 30g d'eau distillée dans un bécher et on ajoute 6g de gélatine marine et 6g de gomme arabique. On agite l'ensemble à 35°C pour accélérer la dissolution. Coacervation

Dans la solution de gélatine et de gomme arabique, on ajoute 25g d'huile de vaseline.

On émulsionne la solution de façon à obtenir des gouttelettes de taille entre 2 et 4µm.

On chauffe 190mL d'eau distillée à 35°C et on ajoute l'émulsion précédemment obtenue sous agitation forte. On agite puis on vérifie au microscope que la taille des gouttelettes est comprise entre 2 et 4 µm.

On ajuste le pH à 4.5 avec de l'acide acétique à 50%. On agite puis on contrôle la taille au microscope. On constate la formation d'agglomérats d'une dizaine à une centaine de µm.

On augmente l'agitation, mais les agglomérats ne diminuent pas de taille. On refroidit en 1 heure jusqu'à 15°C.

### Réticulation

Toujours à 15°C, on introduit 3g de glutaraldéhyde à 25%, nécessaire au durcissement de la paroi. On laisse en contact 1 h sous agitation forte en continuant le refroidissement jusqu'à 10°C.

### Neutralisation

Toujours à 10°C, on élève le pH avec la soude à 10%. La viscosité de la solution de microcapsules augmente beaucoup à partir de pH 6. A pH 7, tout prend en masse.

On arrête l'ajout de NaOH.

Résultats : Cet exemple met bien en évidence l'agglomération des capsules dès le début de la formation du coacervat. De plus, l'absence d'un agent anti-agglutination ou d'une dilution à l'eau avant la neutralisation a entraîné une prise en masse de toute la solution de microcapsules.

Exemple n°2: montrant l'agglomération des capsules de taille inférieure à 50 µm par le procédé de coacervation complexe dans le brevet FR 2091482 sans le traitement hydrophobe en présence de silane.

### Préparation des solutions de gomme arabique et de gélatine

On préparer des solutions à 11 % dans de l'eau distillée.

### Coacervation

On mélange 35g d'eau distillée et 68g d'une solution de gélatine marine à 11 %. On chauffe à 35°C environ pour que la solution de gélatine reste liquide et on ajoute 95 g d'huile de vaseline. La solution obtenue est émulsionnée de façon à obtenir des gouttelettes de taille entre 2 et 8µm.

On chauffe à 55°C 325mL d'eau distillée mélangée avec 6g d'une solution de PVM/MA à 5% et 45,5g d'une solution de gomme arabique à 11 %. On ajuste le pH à 9 avec NaOH 10%. On ajoute l'émulsion précédemment obtenue, sous agitation et on agite 5min. On vérifie au microscope que la taille des gouttelettes est comprise entre 2 et 8 µm.

Le pH est ajusté à 4.6 avec de l'acide acétique à 14%. Après 10min d'agitation, le contrôle de la taille au microscope montre des agglomérats formés entre 10 et 100 µm. L'agitation est portée à 900 tr/min pendant 10 min avant de refroidir lentement jusqu'à 10°C.

### Réticulation

Toujours à 10°C, on introduit 3,75g de glutaraldéhyde à 25%, nécessaire au durcissement de la paroi. On laisse en contact 1 h sous agitation à 1300tr/min en maintenant le refroidissement jusqu'à 10°C.

Résultats : Les microcapsules préparées selon ce protocole se sont agglomérées dès le début de la formation de la paroi capsulaire. Après la réticulation, la taille des agglomérats a cependant diminué mais reste comprise entre 5 et 20 µm.

Les exemples n°1 et n°2 montrent bien la difficulté d'obtenir par coacervation complexe des capsules de taille inférieure à 50µm, isolées, filtrables et redispersables dans l'eau. En effet, si on n'intervient pas avant la formation de la paroi capsulaire, il y a formation d'agglomérats de taille allant de 5 à 20µm voire quelques centaines de µm.

Les exemples qui suivent illustrent l'objet de l'invention dont l'amélioration porte sur l'ajout d'un agent anti-agglomération juste avant la formation de la paroi capsulaire, c'est-à-dire avant l'abaissement du pH vers 4,5.

Exemple n°3 : obtention de microcapsules de cristaux liquides de taille comprise entre 6 et 12 µm, isolées, filtrables et redispersables dans une encre.

Les cristaux liquides étant très sensibles aux agressions extérieures, on utilise de l'eau distillée traitée pour préparer les microcapsules. Toute la verrerie et tout le matériel (ancre d'agitation, spatule...) sont préalablement lavés à l'eau de Javel puis rincés deux fois avec l'eau distillée traitée contenant des conservateurs. Préparation des solutions diluées

On prépare toutes les solutions à 50% d'acide acétique et à 10% de soude avec l'eau distillée traitée.

### Préparation de la solution de gomme arabique et de gélatine

On pèse 43g d'eau distillée traitée dans un bécher et on ajoute 3.5g de gélatine porcine et 3.5g de gomme arabique. On agite la solution jusqu'à dissolution complète.

### Coacervation

Dans la solution de gélatine et de gomme arabique, on ajoute 37g de cristaux liquides et 0.5g d'INTACOL S22Na avec une pipette et l'on chauffe entre 30°C et 40°C. La solution obtenue est émulsionnée de façon à obtenir des tailles inférieures ou égales à 10µm.

On chauffe 190mL d'eau traitée et on ajoute l'émulsion précédemment obtenue sous agitation forte. On laisse en contact quelques minutes puis on vérifie au microscope que la taille des gouttelettes est comprise entre 6 et 12 µm.

On ajoute 0,5g de (3-glycidyloxypropyl) triméthoxysilane pour empêcher l'agglomération. Le pH est abaissé entre 4 et 5 avec de l'acide acétique à 50% puis on laisse l'agitation.

On démarre le refroidissement pour amener la température à environ 15°C. On contrôle la taille après quelques minutes.

### Réticulation

A 15°C, on introduit très lentement 10.3g de glutaraldéhyde à 25%, nécessaire au durcissement de la paroi. On laisse en contact sous agitation forte.

### Neutralisation

Toujours à 15°C, le pH est ajusté à 7 avec la soude à 10%.

### Purification

Les microcapsules décantent dans l'ampoule à décanter. On jette l'eau de l'ampoule et on filtre les capsules sur Büchner. On peut aisément redisperser les capsules dans une encre aqueuse.

Résultats : Les capsules préparées selon cet exemple sont isolées, filtrables et redispersables dans une encre aqueuse. Ces capsules ont un diamètre compris entre 6 et 12µm.

Exemple n°4 : obtention de microcapsules de dispersion huileuse d'oxyde de titane, de taille environ 25 µm, isolées, filtrables et redispersables dans l'eau. Préparation de la solution de gomme arabique et de gélatine

On pèse 43g d'eau distillée dans un bécher et on ajouter 3.5g de gélatine porcine et 3.5g de gomme arabique. On agite la solution jusqu'à dissolution complète. Pour accélérer la dissolution, on chauffe légèrement la solution à 30-40°C. Coacervation

Dans la solution de gélatine et de gomme arabique, on ajoute 32,4g de dispersion huileuse d'oxyde de titane appelée commercialement Blanc Covalim et 0.5g d'INTACOL S22Na avec une pipette et on chauffe entre 30 et 40°C. Puis on émulsionne la solution obtenue de façon à obtenir des gouttelettes de taille environ 20µm.

On chauffe 190mL d'eau distillée et on ajoute l'émulsion précédemment obtenue sous agitation forte. On laisse en contact. La taille des gouttelettes observées au microscope est d'environ 25µm.

On ajoute 0,5g de (3-glycidyloxypropyl) triméthoxysilane pour empêcher l'agglomération. On abaisse le pH entre 4 et 5 avec de l'acide acétique à 50% et on ajoute 0,5g d'antimousse Dehydran puis on laisse tourner.

On refroidit à environ 15°C. La taille après quelques minutes est toujours de l'ordre de 25µm.

### Réticulation

Toujours à 15°C, on introduit très lentement 10.3g de glutaraldéhyde à 25%, nécessaire au durcissement de la paroi. On laisse en contact sous agitation forte. Neutralisation

Toujours à 15°C, on élève le pH avec la soude à 10% jusqu'à 7.

### Purification

On laisse décanter les microcapsules dans l'ampoule à décanter et on les lave une fois avec de l'eau. Les capsules sont filtrées sur Büchner. On observe que l'on disperse aisément 75g de capsules dans 25g d'eau.

Résultats : Les capsules préparées suivant cet exemple sont isolées, filtrables et redispersables dans l'eau. Ces capsules ont un diamètre d'environ 25 µm.

Exemple n°5 : obtention de microcapsules d'émulsion double E1/H/E2 de taille environ 15 µm, isolées, filtrables et redispersables dans l'eau.

### Préparation de l'émulsion primaire E1/H

On préparer la phase aqueuse E1 en solubilisant 200mg de colorant hydrosoluble indigo carmine dans 30 ml d'eau distillée.

On chauffe entre 50 et 80°C 30 g d'huile de paraffine Linpar C13/14 et 4,4 g de Span 80, sous agitation. On ajoute les 30 g de phase aqueuse E1. Le mélange est émulsionné jusqu'à l'obtention de gouttelettes de 2µm. On refroidit l'émulsion primaire E1/H entre 30 et 40°C.

### Préparation des solutions de gomme arabique et de gélatine

On pèse 43g d'eau distillée dans un bécher et on ajoute 3.5g de gélatine marine et 3.5g de gomme arabique. On agite la solution jusqu'à dissolution complète en chauffant légèrement la solution à 30-40°C.

### Coacervation

Dans la solution de gélatine et de gomme arabique, on ajoute 37g d'émulsion primaire E1/H et 0.5g d'INTACOL S22Na avec une pipette et on chauffe entre 30 et 40°C. Puis on émulsionne de façon à obtenir des gouttelettes de double émulsion E1/H/E2 de taille environ 15 µm.

On chauffe 190mL d'eau distillée et on y ajoute l'émulsion précédemment obtenue sous agitation forte. On laisse en contact 5min. La taille des gouttelettes vues au microscope est de l'ordre de 10 à 15 µm.

On ajoute 0,5g de (3-glycidyloxypropyl) triméthoxysilane pour empêcher l'agglomération. Le pH est abaissé entre 4 et 5 avec de l'acide acétique à 50% puis on agite.

On refroidit à environ 15°C. La taille après quelques minutes est toujours de l'ordre de 10 à 15µm.

### Réticulation

A 15°C, on introduit très lentement 10.3g de glutaraldéhyde à 25%, nécessaire au durcissement de la paroi. On laisse en contact sous agitation forte.

### Neutralisation

Toujours à 15°C, le pH est porté à 7 avec la soude à 10%.

### Purification

On laisse décanter les microcapsules dans l'ampoule à décanter et on filtre les capsules sur Büchner. Les capsules sont redispersées dans 50% d'eau.

Résultats : Les capsules préparées suivant cet exemple sont isolées, filtrables et redispersables dans l'eau. Ces capsules ont un diamètre compris entre 10 et 15 µm.

## Revendications

1. Procédé de fabrication de microcapsules de principes actifs hydrophobes de tailles inférieures à 50 µm, de préférence entre 1 et 20 µm, isolées, filtrables et redispersables dans l'eau, **caractérisé en ce que** le procédé de coacervation est amélioré par l'introduction d'un agent anti-agglomération avant la formation de la paroi capsulaire.

2. Procédé selon la revendication 1, **caractérisé par le fait que** l'agent anti-agglomération est un silane capable de réagir avec la gélatine et /ou un colloïde de charge opposée.

3. Procédé selon les revendications 1 à 2, **caractérisé par le fait que** le colloïde de charge opposée est la gomme arabique.

4. Procédé selon les revendications 1 à 3, **caractérisé par le fait que** le composé anti-agglomération est le (3-glycidyloxypropyl)trimethoxysilane.

5. Procédé selon les revendications 1 à 4, **caractérisé par le fait que** le pourcentage de composé anti-agglomération nécessaire pour empêcher l'agglomération des capsules est compris entre 0,1 et 10 % et de préférence entre 0,5 et 5% en masse.

6. Procédé selon les revendications 1 à 4, **caractérisé par le fait que** le principe actif hydrophobe est un composé huileux non miscible dans l'eau.

7. Procédé selon les revendications 1 à 5, **caractérisé par le fait que** le principe actif hydrophobe est un mélange de cristaux liquides.

8. Procédé selon les revendications 1 à 5, **caractérisé par le fait que** le principe actif hydrophobe est une dispersion huileuse d'oxyde de titane

9. Procédé selon les revendications 1 à 5, **caractérisé par le fait que** le principe actif hydrophobe est une émulsion primaire de type E1/H.
